# EUROPEAN PATENT SPECIFICATION

(11) **EP 4 600 874 B1**
(45) Date of publication and mention of the grant of the patent: **08.04.2026**
(21) Application number: 24208251.9
(22) Date of filing: 23.10.2024
(51) Int. Cl.: G06Q 10/06, G06F 16/3329, G06F 9/48, G06F 9/54, G06N 5/043, G06Q 10/10, G06F 16/332, G06F 40/00, G06Q 10/0631

(54) **METHOD AND SYSTEM FOR PROCESSING TASK THROUGH COLLABORATION BETWEEN AGENTS**
VERFAHREN UND SYSTEM ZUR VERARBEITUNG EINER AUFGABE DURCH ZUSAMMENARBEIT ZWISCHEN AGENTEN
PROCÉDÉ ET SYSTÈME DE TRAITEMENT DE TÂCHE PAR COLLABORATION ENTRE DES AGENTS

(30) Priority: 07.02.2024 KR 20240018926; 28.05.2024 KR 20240069413
(43) Date of publication of application: 13.08.2025
(60) Divisional application: 26161836.7
(73) Proprietor: Samsung SDS Co., Ltd., Seoul 05510 (KR)
(72) Inventor: Yang, Jae Young, 05510 SEOUL (KR); Hong, Yoo Jin, 05510 SEOUL (KR); Yoo, Jae Chun, 05510 SEOUL (KR)
(74) Representative: Glawe, Delfs, Moll

(56) References cited:
- US-A1- 2022 415 316
- US-A1- 2023 368 284

## Description

### BACKGROUND

### Technical Field

The present disclosure relates to a method and system for processing a task through collaboration between agents, and more particularly, to a method capable of processing a task, which cannot be processed by only one agent, through collaboration between different agents, and a system to which the method is applied.

### Description of the Related Art

Provided is an agent module that processes a user request of a specific domain by using a large language model. The agent module may generate an answer to a user query through a query for the large language model or a call of an external application programming interface (API). However, the agent module has a limitation that it may respond only to a user request of a domain corresponding to an expert domain of the agent.

Therefore, for task automation, it is necessary to implement a number of expert agents capable of processing tasks specialized for a specific domain (specific task or system scope). However, in the process of processing one user request, various task processing capabilities beyond the scope that one agent module may process may be required, and thus collaboration between expert agents is required.

However, the existing multi-agent collaboration methodology is proposed to operate for a specific task or define expert agents in roles necessary for a set purpose, and the method of collaboration between expert agents may be pre-designed step by step.

Therefore, the technology capable of realizing complete automation of a task by effectively processing various tasks, which cannot be processed by only one agent, through collaboration between different agents will be required.

### [Prior Art Reference]

### [Patent Reference]

(Patent Reference 1) US Laid-Open No. 2023/0368284(Laid-open on November 16, 2023)
(Patent Reference 2) Chinese Laid-Open Patent No. 117744795(Laid-open on March 22, 2024)
(Patent Reference 3) US2022415316A1

### [Non-Patent Reference]

(Non-Patent Reference 1)Yilun Du, Shuang Li, Antonio Torralba, Joshua B. Tenenbaum, Igor Mordatch. Improving Factuality and Reasoning in Language Models through Multiagent Debate. https://arxiv.org/abs/2305.14325, 2023.
(Non-Patent Reference 2)Chen Qian, Xin Cong, Wei Liu, Cheng Yang, Weize Chen, Yusheng Su, Yufan Dang, Jiahao Li, Juyuan Xu, Dahai Li, Zhiyuan Liu, Maosong Sun. Communicative Agents for Software Development. https://arxiv.org/abs/2307.07924, 2023.
(Non-Patent Reference 3)Xiangru Tang, Anni Zou, Zhuosheng Zhang, Ziming Li, Yilun Zhao, Xingyao Zhang, Arman Cohan, Mark Gerstein. MedAgents: Large Language Models as Collaborators for Zero-shot Medical Reasoning. https://arxiv.org/abs/2311.10537, 2023.

### BRIEF SUMMARY

An object of the present disclosure is to provide a system and method for processing a user request through collaboration with another agent when the user request, which cannot be processed by one of multiple agents, is received.

Another object of the present disclosure is to provide a system and method in which a multi-agent collaboration-based request processing service is provided only by adding natural language-based peer-to-peer (p2p) communication between agents.

Other object of the present disclosure is to provide a system and method in which when a user request, which cannot be processed by one of multiple agents, is received, an optimal agent, which will collaborate to process the user request, may be automatically selected from the other agents, whereby a processing result for a user request requiring processing capabilities in various domains may be generated.

The objects of the present disclosure are not limited to those mentioned above and additional objects of the present disclosure, which are not mentioned herein, will be clearly understood by those skilled in the art from the following description of the present disclosure.

According to an aspect of the inventive concept, there is provided a method for processing a task through collaboration between agents, which is performed by a computing system. The method may comprise receiving a user request by a first agent from a user terminal and determining whether the first agent may process the user request by itself, inquiring detailed information on each of a plurality of agents when the first agent determines that it cannot process the user request by itself, and determining a recipient of a first task processing request, which requests to process at least some of a plurality of sub-tasks constituting a target task for generating a processing result for the user request, based on the detailed information, transmitting the first task processing request to a second agent determined as the recipient of the first task processing request, receiving first external processing result data from the second agent in response to the first task processing request and generating final processing result data for the user request by using the first external processing result data and transmitting the final processing result data to the user terminal.

In some embodiments, the determining whether the first agent may process the user request by itself may include generating a first prompt for generating a plan for processing a target task that generates an answer to the user request and receiving the plan from a first large language model that has received the first prompt, and the plan may include a sub-task list of a step-by-step manner to process the target task.

In some embodiments, the first prompt may include at least one of domain information in charge for the first agent or information on an API set available for the first agent.

In some embodiments, the sub-task list may include information on a first sub-task that may be processed by the first agent and information on a second sub-task that cannot be processed by the first agent, and the information on the first sub-task may include API information corresponding to the first sub-task.

In some embodiments, the determining whether the first agent may process the user request by itself may include generating a second prompt for determining whether the first agent may process the user request by itself and receiving a determination result as to whether the first agent may process the user request by itself, from a second large language model that has received the second prompt.

In some embodiments, the first task processing request may request processing of a first sub-task among a plurality of sub-tasks constituting the target task, and the final processing result data may be generated using the first external processing result data and internal processing result data generated for the others except the first sub-task among the plurality of sub-tasks.

In some embodiments, the transmitting the final processing result data to the user terminal may include generating a prompt for evaluating the final processing result data and transmitting the prompt to a large language model, receiving an evaluation result for the final processing result data from the large language model that has received the prompt and transmitting the final processing result data to the user terminal based on the evaluation result.

In some embodiments, the transmitting the final processing result data to the user terminal based on the evaluation result may further include transmitting the evaluation result to an agent determination module.

In some embodiments, the transmitting the final processing result data to the user terminal may include transmitting the final processing result data to the user terminal, inputting the final processing result data to a pre-learned evaluation model and transmitting the final processing result data to the user terminal only when a score output from the evaluation model is greater than or equal to a reference value.

According to still another aspect of inventive concept, there is provided a task processing system through collaboration between agents. The task processing system may comprise one or more processors and a memory storing one or more computer programs executed by the one or more processors, wherein the one or more computer programs may include instructions for: an operation of receiving a user request by a first agent from a user terminal and determining whether the first agent may process the user request by itself, an operation of inquiring detailed information on each of a plurality of agents when the first agent determines that it cannot process the user request by itself, and determining a recipient of a first task processing request, which requests to process at least some of a plurality of sub-tasks constituting a target task for generating a processing result for the user request, based on the detailed information, an operation of transmitting the first task processing request to a second agent determined as the recipient of the first task processing request, an operation of receiving first external processing result data from the second agent in response to the first task processing request and an operation of generating final processing result data for the user request by using the first external processing result data and transmitting the final processing result data to the user terminal.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is an exemplary schematic view illustrating a task processing system through collaboration between agents according to one embodiment of the present disclosure;
FIG. 2 is an exemplary view illustrating a plurality of modules constituting an agent according to one embodiments of the present disclosure;
FIG. 3 is a flow chart illustrating a task processing method through collaboration between agents according to one embodiment of the present disclosure;
FIG. 4 is a view illustrating exemplary detailed information on each of a plurality of agents, which is referenced in some embodiments of the present disclosure;
FIG. 5 is a view illustrating an example of a large language model prompt generated to generate a plan for processing a user request in consideration of information on both API and agent in some embodiments of the present disclosure;
FIG. 6 is an exemplary view illustrating an example of a large language model prompt generated to evaluate a processing result received from an agent in some embodiments of the present disclosure;
FIG. 7 is a flow chart illustrating a task processing method through collaboration between agents in some embodiments of the present disclosure;
FIG. 8 is a view illustrating an example of a large language model prompt generated to generate a plan for processing a task processing request by using an API registered in a recipient agent in some embodiments of the present disclosure;
FIG. 9 is an exemplary view illustrating an example of a large language model prompt generated to evaluate a plan in some embodiments of the present disclosure; and
FIG. 10 is a hardware schematic view illustrating a task processing system through collaboration between agents according to some embodiments of the present disclosure.

### DETAILED DESCRIPTION OF THE DISCLOSURE

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings.

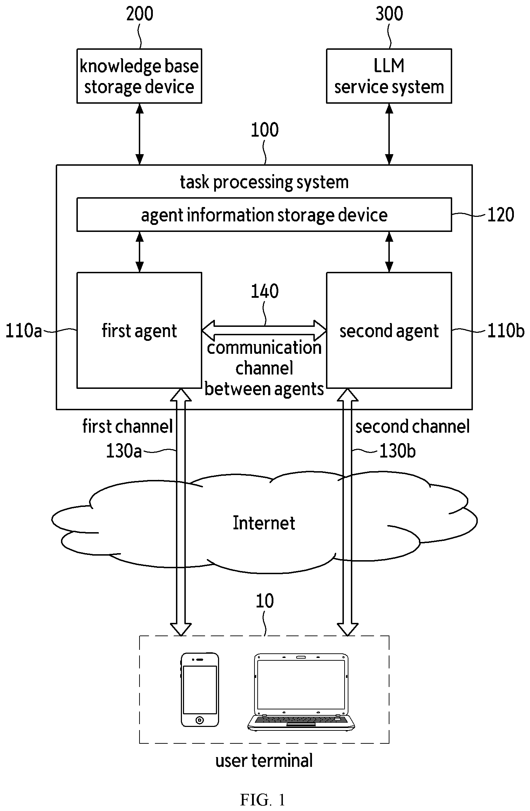

FIG. 1 is an exemplary schematic view illustrating a task processing system through collaboration between agents according to one embodiment of the present disclosure.

As shown in FIG. 1, the task processing system through collaboration between agents according to the present embodiment may include a task processing system 100, a user terminal 10, a knowledge information storage device 200 and an LLM service system 300.

The task processing system 100 is a computing system that is connected to the user terminal 10 through Internet, receives a user request from the user terminal 10, generates a processing result for the user request and transmits the generated processing result to the user terminal 10, and may be a computing system composed of one or more physical servers or one or more cloud computing instances.

The task processing system 100 may include a plurality of agents 110a and 110b. In this case, the plurality of agents may be executed by agent execution devices corresponding to respective agents. For example, the first agent 110a may be a physical server or a cloud computing instance, which executes a first agent, and the second agent 110b may be a physical server or a cloud computing instance, which executes the first agent.

Meanwhile, the plurality of agents may be executed through different containers within one agent execution device. In this case, each of a plurality of containers in one agent execution device may be a type of a compute instance provided through cloud services, and will be able to make sure of fixed resources for each of the first agent 110a and the second agent 110b.

As shown in FIG. 1, the first agent 110a and the second agent 110b may share one knowledge information device 200 and one LLM service system 300. However, in some embodiments, the first agent 110a may be connected to a first knowledge information device and a first LLM service system, and the second agent 110b may be connected to a second knowledge information device and a second LLM service system. In this case, the first knowledge information device and the second knowledge information device may be devices different from each other, and the first LLM service system and the second LLM service system may be systems different from each other. That is, the plurality of agents may be understood as being connected to a knowledge information device and an LLM system, which are suitable for performing a task performed by each agent.

In more detail, different agents may mean that they are different from each other in an expert domain in charge and a channel in charge. That is, it may be understood that the first agent is a host agent of a first channel, which is responsible for a first expert domain and is dedicated to generating a processing result for a user request received through the first channel, and a second agent is a host agent of a second channel, which is responsible for a second expert domain and is dedicated to generating a processing result for a user request received through the second channel. Meanwhile the first channel and the second channel may mean co-pilot channels.

In more detail, the co-pilot channel may be understood as a channel through which a user who is using specific client software or a specific online service of the user terminal 10 may input a request in the form of a natural language. That is, the first co-pilot channel may be a request processing channel provided to a user who is using first software (or a first online service), and the second co-pilot channel may be a request processing channel provided to a user who is using second software (or a second online service).

Meanwhile, the first channel and the second channel may be configured in the form of a chatbot, a messenger chat room, an automated response system (ARS), an agent service of a home IoT system, an agent service of an autonomous vehicle or a help display screen of a client application.

Referring back to FIG. 1, the knowledge base storage device 200 is a database server for storing internal information of an institution that manages the task processing system 100, and may allow only authorized access. Also, the LLM service system 300 may be a system that provides a request processing service based on a large language model (LLM) in which a large amount of public information is learned. Therefore, the first agent 110a and the second agent 110b may inquire information (i.e., non-public information, public information) necessary for generating a processing result for a user request through the knowledge information storage device 200 and the LLM service system 300.

The first agent 110a and the second agent 110b may request task processing or may receive a request for task processing through a communication channel 140 between agents. The communication channel 140 between agents may support a natural language-based peer-to-peer (p2p) communication of a predefined format. Since the first agent 110a and the second agent 110b are software modules that process a natural language-based user request introduced through the first channel 130a and the second channel 130b, respectively, a function for natural language processing has been already implemented, and an additional function implementation will hardly be required in order to transmit and receive a message in the form of a natural language to and from another agent. Also, since p2p communication does not separately require a module for managing communication, the additional function implementation will be minimized. Therefore, since communication between agents is performed by a natural language-based p2p communication scheme of a predefined format, the development of an additional function for implementing the task processing system 100 of the present disclosure may be minimized as compared with the related art system for driving an agent that is responsible for the channel.

In case of the related art, it was difficult to generate an appropriate processing result when a user request out of an expert domain of an agent that is responsible for a specific channel is introduced. On the other hand, even though a user request out of an expert domain of an agent that is responsible for a specific channel is introduced, the task processing system 100 of the present disclosure may provide a function capable of generating an appropriate processing result by generating a processing result through collaboration between a plurality of agents.

When a user request is introduced into the first agent 110a through the first channel 130a, the first agent 110a may determine whether it may process the target task for generating a processing result for the user request by itself. When even some of a plurality of sub-tasks constituting the target task cannot be performed by the first agent 110a, the first agent 110a may determine that the target task cannot be processed by the first agent itself.

In this case, in the related art, when the target task for generating the processing result for the user request cannot be processed, the first agent 110a could transmit a message, which indicates that the processing result for the user request cannot be generated, to the user terminal through the first channel 130a. However, according to the present disclosure, even though the processing result for the user request cannot be generated 'by itself', a message indicating that the processing result cannot be generated may not be transmitted, and whether to be capable of generating the processing result may be additionally determined by another agent in the task processing system 100, whereby a target task for generating the processing result for the user request may be processed using another agent capable of generating the processing result.

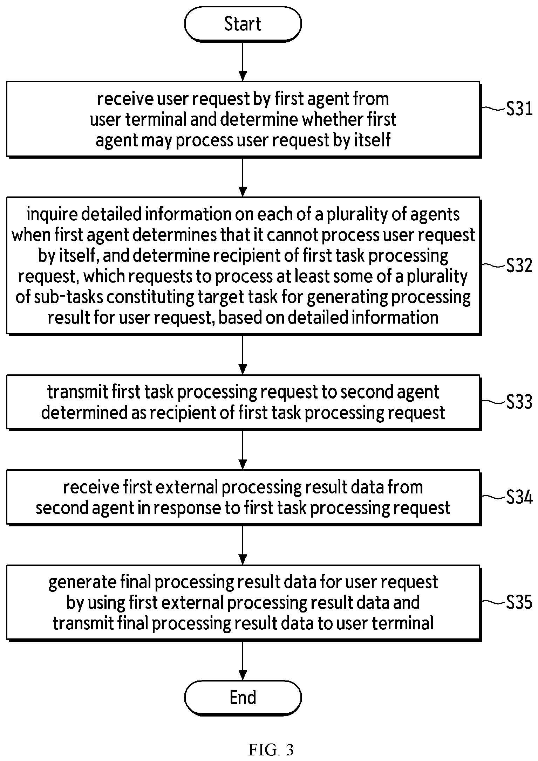

This will be described later in detail with reference to the drawings subsequent to FIG. 3.

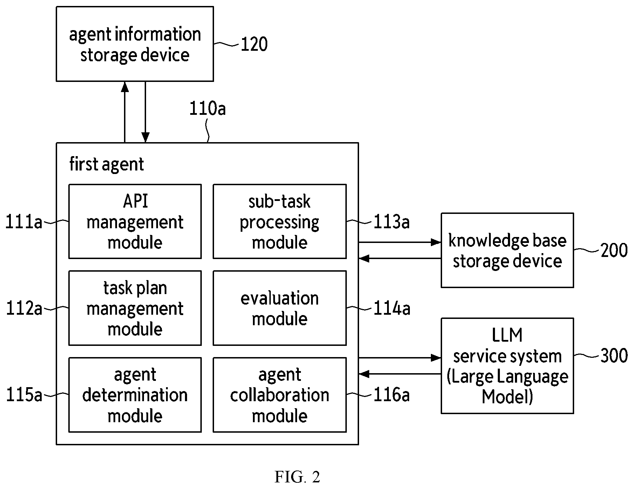

FIG. 2 is an exemplary view illustrating a plurality of modules constituting an agent according to one embodiment of the present disclosure.

As shown in FIG. 2, the first agent 110a may include an API management module 111a, a task plan management module 112a, a sub-task processing module 113a, an evaluation module 114b, an agent determination module 115a and an agent collaboration module 116a.

The API management module 111a may generate a query for searching for a candidate API, which may be used to process a specific user request, among a plurality of APIs registered in the first agent 110a, and may search for the candidate API by using the generated query.

The task plan management module 112a may determine a target task for generating a processing result by analyzing the user request, and may generate a plan for processing the target task. In this case, the plan may be composed of a plurality of sub-tasks of a step-by-step manner through linkage with a large language model (LLM) 300. In addition, in generating the plan, only information on the API registered in the first agent may be considered, or information on other agents in the task processing system 100 may be considered together with the information on the API. Furthermore, the task plan management module 112a may sequentially process the plurality of tasks one by one by using information on an API or agent corresponding to each of the plurality of sub-tasks constituting the plan, and may generate final processing result data corresponding to the user request.

The evaluation module 114a may determine whether the plan generated to process the target task for generating the processing result for the user request is appropriate or determine whether the final processing result data for the user request, which is generated as a processing result of the plan, or external processing result data received from another agent is appropriate. In this case, the evaluation module 114a may evaluate at least some of a pre-generated plan or processing result data (e.g., internal/external processing result data and final processing result data) by using the LLM 300 or a pre-learned evaluation model.

When it is determined that the first agent 110a cannot process the processing result for the user request introduced through the first channel by itself, the agent determination module 115a may determine a recipient agent to be responsible for processing some (i.e., sub-tasks) of a plurality of steps for processing the user request. In this case, the agent determination module 115a may receive detailed information of all agents capable of collaborating in the task processing system 100 from the agent information storage device 120, and may determine one or more recipient agents based on the received detailed information.

Finally, the agent collaboration module 116a may provide various functions necessary for collaboration between the first agent 110a and other agents. The agent collaboration module 116a may request the recipient agent, which is to be responsible for processing some (i.e., sub-tasks) of the plurality of steps for processing the user request, to perform task processing, and may receive external processing result data in response to the task processing request. Also, the agent collaboration module 116a may request the host agent to process some sub-tasks, and may transmit processing result data generated in response to the processing request to the host agent.

In addition, the API management module 111a, the task plan management module 112a, the sub-task processing module 113a and the evaluation module 114b are modules necessary only for the operation of the first agent, and the agent determination module 115a and the agent collaboration module 116a may be understood as modules necessary for the collaboration operation between the first agent and other agents.

A more detailed description of a task processing method through collaboration between agents, which is performed through the plurality of modules illustrated in FIG. 2, will be described later with reference to FIGS. 3 to 9.

FIG. 3 is a flow chart illustrating a task processing method through collaboration between agents according to one embodiment of the present disclosure. However, this is only a preferred embodiment for achieving the object of the present disclosure, and it is obvious that some steps may be added or deleted as necessary. For reference, FIG. 3 illustrates steps/operations of a method performed by the device or modules shown in FIGS. 1 and 2.

As illustrated in FIG. 3, the task processing method through collaboration between agents according to one embodiment of the present disclosure may start in step S31 of receiving a user request by a first agent from a user terminal and determining whether the first agent may process the user request by itself. In this case, the user request may be introduced to the first agent through the first channel. Also, whether the first agent may process the user request by itself may be determined by the task plan management module 112a illustrated in FIG. 2.

In some embodiments, the task plan management module may determine whether it may process the user request by itself by generating a first prompt for generating a plan for processing a target task that generates a processing result for the user request, inputting the first prompt into a first large language model and receiving the plan from the first large language model that has received the first prompt. In this case, the first prompt may include at least one of domain information in charge for the first agent (i.e., the host agent) or information on an API set available for the first agent.

Also, the plan may include a sub-task list of a step-by-step manner to process the target task. In addition, the sub-task list may include information on a first sub-task that may be processed by the first agent and information on a second sub-task that cannot be processed by the first agent. In this case, the information on the first sub-task may include information on an API corresponding to the first sub-task.

That is, it may be understood that the plan includes information on whether the first agent may process a plurality of sub-tasks of a step-by-step manner, which constitute the target task. For example, when all sub-tasks may be processed only by the API registered in the first agent, selection information on another agent may not be included in the plan, and when all sub-tasks cannot be processed only by the API registered in the first agent, selection information on another agent may be included in the plan or selection information on an API corresponding to some sub-tasks that cannot be processed may be omitted.

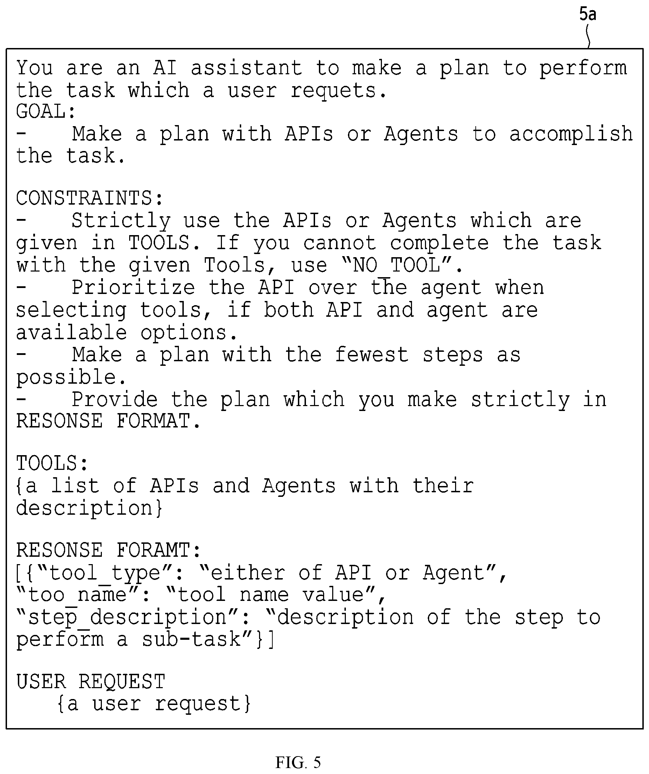

FIG. 5 is a view illustrating an example of a large language model prompt generated to generate a plan for a processing result for a user request in consideration of information on both API and agent in some embodiments of the present disclosure.

As illustrated in FIG. 5, in order to generate a plan for processing a target task that generates a processing result for a user request, the task plan management module 112a may generate a prompt to output a result in a usable format by internally parsing a sub-task segmented based on the user request and the information on the API registered in the first agent and a selection request of API used for processing the sub-task. In this case, the prompt may be generated to include detailed information on other agents received from the agent information storage device as well as the information on the API registered in the first agent.

Afterwards, the plan is generated as a result of inputting the generated prompt to the large language model. In this case, when the API is selected for each sub-task constituting the plan, the sub-task may be processed through the sub-task processing module, and when another agent is selected, the corresponding agent selected through the agent collaboration module may be requested to process the sub-task.

In some embodiments, the task plan management module may generate a second prompt for determining whether the first agent may process the user request introduced through the first channel by itself, and may receive a determination result as to whether it may process the user request by itself, from the second large language model that has received the second prompt. This may be understood as requiring only the result of whether the first agent may process the user request by itself, without generating a detailed plan for generating the processing result through the large language model.

Referring back to FIG. 3, in step S32, when it is determined through step S31 that the user request cannot be processed by itself by the first agent, the agent determination module may inquire detailed information on each of the plurality of agents, and may determine a recipient of a first task processing request for processing at least some of the plurality of sub-tasks constituting the target task for generating the processing result for the user request, based on the detailed information. In this case, the recipient of the first task processing request may be one or more agents.

That is, the agent determination module may determine the recipient (i.e., the agent) of the task processing request, which is suitable for generating the processing result for the user request, based on the result of inquiring the detailed information on each of the plurality of agents, which is previously stored.

When the recipients of the first task processing request are multiple agents, the first task processing request may be sequentially transmitted based on a priority previously set for the multiple agents. For example, in determining a recipient agent that will transmit a processing request for the same or similar sub-tasks, a high priority may be assigned to an agent which has early completed the processing request or has a large number of processing times, and the recipient agent may be determined based on the priority. In addition, the recipient agent may be determined based on the priority determined based on user's feedback information collected after external processing result data is generated by the recipient agent.

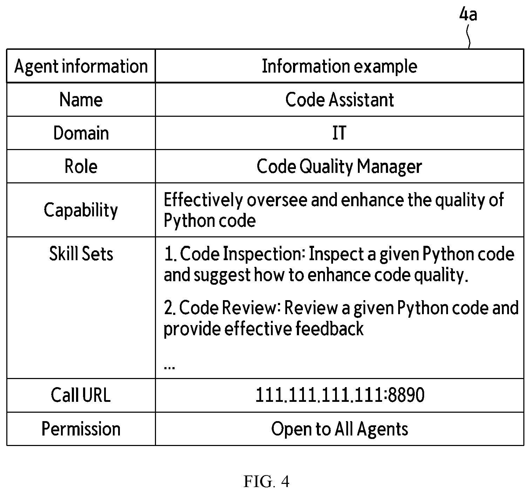

FIG. 4 is a view illustrating exemplary detailed information on each of a plurality of agents, which is referenced in some embodiments of the present disclosure.

Referring to FIG. 4, the detailed information on each agent may include a name of the agent, domain information in charge, access information, and permission information. The domain information in charge may be understood as information indicating an expert domain of a corresponding agent. As illustrated in Table 4a of FIG. 4, the domain information in charge may include a domain to which a corresponding agent belongs among a plurality of predefined domains, role information that is a text for defining a role of a corresponding agent, capability information that is a text for defining the capability of the corresponding agent, and one or more skill sets possessed by the corresponding agent.

The first agent (i.e., the host agent) may generate a large language prompt by using the detailed information on each of the agents as shown in FIG. 4 in order to identify an agent capable of performing a step that cannot be performed by the first agent. The host agent may identify an agent capable of performing a step, which cannot be performed by the host agent, by inputting the generated LLM prompt to the LLM service system 300. The detailed information on each of the agents, which is stored in the agent information storage device 120, may be expressed in the form of a natural language. In this way, even though the detailed information on the agent is freely stored in the formed of a natural language, the first agent (i.e., the host agent) may identify an agent capable of performing a sub-task, which cannot be performed by the first agent, through an LLM service. In storing the detailed information on each of the agents, which is stored in the agent information storage device 120, instead of performing normalization, standardization, formatting and the like, since the detailed information may be freely described in the form of a natural language, management burden of the information stored in the agent information storage device 120 may be reduced.

In some embodiments, in step S32, when it is determined through step S31 that the user request cannot be processed by itself by the first agent, the agent determination module may request the agent information storage device to transmit the detailed information on each of the plurality of agents, and may receive the detailed information from the agent information storage device. In this case, the detailed information may include information on the domain in charge for the agent.

In step S33, the agent collaboration module may request the second agent determined as the recipient of the first task processing request through step S32 to perform the first task processing request. Also, in step S34, the agent collaboration module may receive first external processing result data in response to the first task processing request from the second agent. Afterwards, the agent collaboration module may transmit the first external processing result data to the task plan management module.

Finally, in step S35, the task plan management module may generate final processing result data for the user request by using the first external processing result data received through step S35, and may transmit the final processing result data to the user terminal through the first channel.

In addition, the first task processing request transmitted to the second agent through step S33 may be a request for processing the first sub-task among the plurality of sub-tasks constituting the target task. Also, the final processing result data generated through step S35 may be generated using the first external processing result data generated by the second agent in response to the first task processing request and internal processing result data generated by the first agent for the other sub-tasks except the first sub-task among the plurality of sub-tasks constituting the target task.

In one embodiment, the evaluation module may generate a prompt for evaluating the final processing result data and transmit the generated prompt to the large language model before the final processing result data is transmitted to the user terminal, may receive an evaluation result for the final processing result data from the large language model that has received the prompt and transmit the final processing result data to the user terminal based on the evaluation result.

That is, only when the evaluation result for the final processing result data is valid, the final processing result data for the user request introduced to the first agent may be transmitted to the user terminal through the first channel. When the evaluation result for the final processing result data is not valid, a previously set processing result message (e.g., a processing result non-generation message, an additional information request message and a re-request message for the user request) may be transmitted to the user terminal. Also, when the evaluation result for the final processing result data is not valid, the steps S31 to S34 illustrated in FIG. 3 may be performed again by the first agent.

In this case, the evaluation result may be transmitted to the agent determination module or the agent information storage device so that detailed information of the agent may be updated. Afterwards, an agent for processing a sub-task may be determined based on the updated detailed information of the agent in a process of generating a processing result for another user request.

In one embodiment, the evaluation module may generate a prompt for evaluating the first external processing result data generated by the second agent and transmit the generated prompt to the large language model before the final processing result data is transmitted to the user terminal, may receive an evaluation result for the first external processing result data from the large language model that has received the prompt and transmit the final processing result data to the user terminal based on the evaluation result.

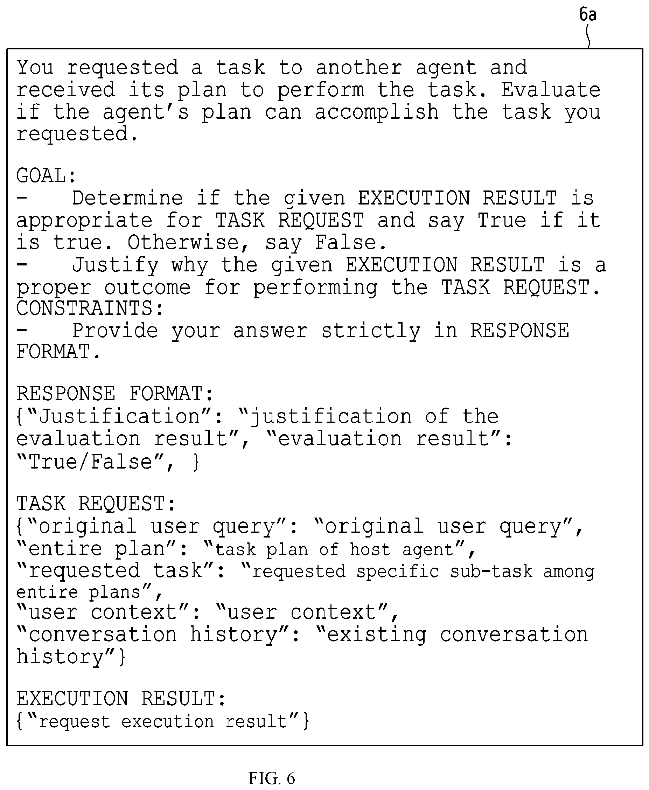

FIG. 6 is an exemplary view illustrating an example of a large language model prompt generated to evaluate a processing result received from an agent in some embodiments of the present disclosure.

As illustrated in FIG. 6, the evaluation module may generate a large language prompt 6a for evaluating external processing result data received from the second agent. The large language prompt 6a may include a purpose GOAL for LLM, constraints CONSTRAINTS, available tools TOOLS, an answer format RESPONSE FORMAT and contents of a task processing request body included in the task processing request TASK REQUEST.

That is, only when the evaluation result for the first external processing result data is valid, final processing result data may be generated. When the evaluation result for the first external processing result data is not valid, the agent collaboration module may transmit the first task processing request to a third agent (i.e., different from the second agent). Afterwards, when second external processing result data received from the third agent is valid, the final processing result data for the user request introduced to the first agent may be generated.

In one embodiment, the evaluation module may input the final processing result data to a pre-learned evaluation model, and may transmit the final processing result data to the user terminal only when a score output from the evaluation model is greater than or equal to a reference value. In this case, the pre-learned evaluation model may be an AI model that is learned using user's feedback information on the final processing result data.

That is, only when the evaluation result for the final processing result data is valid, the final processing result data for the user request introduced to the first agent may be transmitted to the user terminal through the first channel. When the evaluation result for the final processing result data is not valid, a previously set processing result message (e.g., a processing result non-generation message, an additional information request message and a re-request message for the user request) may be transmitted to the user terminal. In addition, when the evaluation result for the final processing result data is not valid, the steps S31 to S35 illustrated in FIG. 3 may be performed again by the first agent.

Meanwhile, the evaluation result may be transmitted to the agent determination module or the agent information storage device so that the detailed information of the agent may be updated. Afterwards, an agent for processing a sub-task may be determined based on the updated detailed information of the agent in a process of generating a processing result for another user request.

The task processing method through collaboration between agents according to some embodiments of the present disclosure has been described with reference to FIGS. 3 to 6. The above description made with reference to FIGS. 3 to 6 includes steps/operations mainly performed by the host agent into which a user query is introduced. Hereinafter, steps/operations mainly performed by a recipient agent that has received a processing request for one or more sub-tasks, which cannot be processed by the host agent, from the host agent into which the user request has been introduced will be described in detail.

A detailed description of a redundant content of the description made with reference to FIGS. 3 to 6 will be omitted.

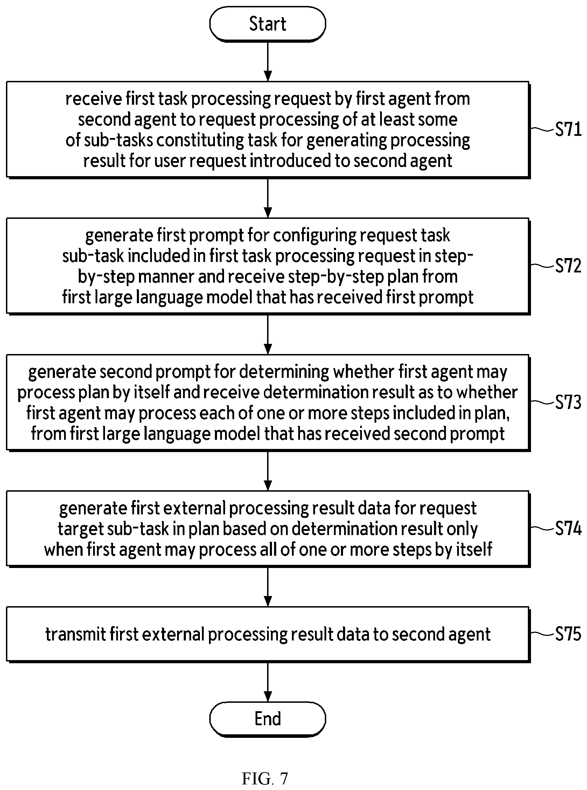

FIG. 7 is a flow chart illustrating a task processing method through collaboration between agents according to one embodiment of the present disclosure. However, this is only a preferred embodiment for achieving the object of the present disclosure, and it is obvious that some steps may be added or deleted as necessary. For reference, FIG. 7 illustrates steps/operations of a method performed by the device or modules shown in FIGS. 1 and 2.

Meanwhile, in the above description with reference to FIGS. 3 to 6, the 'first agent' means a host agent, and the 'second agent' means a recipient agent that has received a task processing request from the first agent. However, in the following description made with reference to FIGS. 7 to 9, it should be noted that the 'first agent' means a recipient agent and the 'second agent' means a host agent that has requested the first agent to process a task.

As illustrated in FIG. 7, a task processing method through collaboration between agents according to one embodiment of the present disclosure may start in step S71 in which the first agent receives, from the second agent, a first task processing request for requesting processing of at least some of the sub-tasks constituting the task for generating a processing result for the user request introduced to the second agent from the user terminal. In this case, the user request may be introduced to the second agent through the second channel. That is, it may be understood that the first agent does not generate a processing result for the user request introduced to the first agent through the first channel, but generates a portion of the processing result for the user request introduced to the second agent through the second channel.

In addition, it may be understood that the recipient agent has received the task processing request transmitted by the host agent to the recipient agent through the steps S31 to S34 described with reference to FIG. 3.

In step S72, the first agent (i.e., the recipient agent) may generate a first prompt for configuring a request target sub-task included in the first task processing request in a step-by-step manner, and may receive a step-by-step plan from a first large language model that has received the first prompt. In addition, the step S72 may be performed by the task plan management module of the first agent. In this case, the first prompt may include at least one of domain information in charge for the first agent (i.e., the recipient agent) or information on an API set available for the first agent.

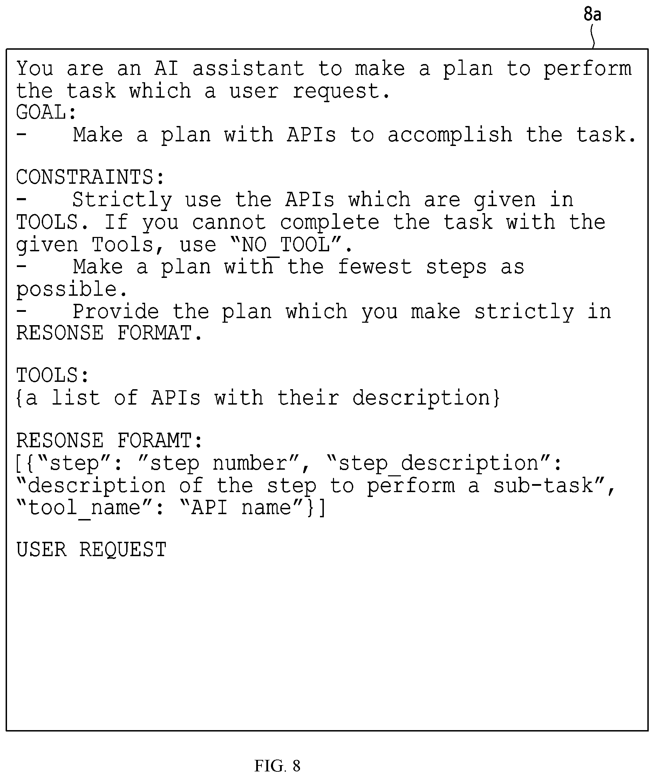

FIG. 8 is a view illustrating an example of a large language model prompt generated to generate a plan for processing a task processing request by using an API registered in a recipient agent in some embodiments of the present disclosure.

As illustrated in FIG. 8, the task plan management module may generate a large language prompt 8a for generating a plan corresponding to the request target sub-task included in the task processing request received from the second agent. The large language prompt 8a may include a purpose GOAL for LLM, constraints CONSTRAINTS, available tools TOOLS, an answer format RESPONSE FORMAT and contents of a user query included in the task processing request USER REQUEST. In addition, it may be understood that the large language prompt 8a is for generating a plan based only on the information on the API registered in the first agent. However, the large language prompt for generating a plan corresponding to the request target sub-task is not limited to the contents illustrated in FIG. 8, and the large language prompt for generating a plan corresponding to the request target sub-task may be generated based on information on the API registered in the first agent and information on another agent as illustrated in FIG. 5.

The process of generating a plan (i.e., sub-task list) of a step-by-step manner by using LLM based on a specific task (i.e., processing request target sub-task), and details of the plan are the same as or almost similar to those described with reference to FIG. 3, and thus their detailed description will be omitted.

Referring back to FIG. 7, in step S73, the first agent (i.e., the recipient agent) may generate a second prompt for determining whether the first agent may process the plan received through the step S72 by itself, and may receive a determination result as to whether it may process each of one or more steps included in the plan, from the first large language model that has received the second prompt. In addition, the step S73 may be performed by the task plan management module of the first agent.

In one embodiment, the task plan management module may generate a second prompt for determining whether the first agent may process the user request introduced through the first channel by itself, and may receive a determination result as to whether it may process the user request by itself, from the second large language model that has received the second prompt. This may be understood as requiring only the result of whether the first agent may process the user request by itself, without generating a detailed plan for generating the processing result through the large language model.

Meanwhile, as illustrated in FIG. 7, the step of acquiring the step-by-step plan by inputting a prompt (i.e., a prompt for generating a plan) configuring a request target sub-task included in the task processing request received from the host agent to the LLM and the step of acquiring a determination result as to whether the first agent may process the plan by itself by inputting a prompt for determining whether the first agent may process the acquired plan by itself, to the LLM do not have to be performed separately. In other words, as a result of inputting a prompt (i.e., a prompt for generating a plan) for configuring the request target sub-task in a step-by-step manner to the LLM in accordance with the type or performance of the LLM registered in the LLM service system, the determination result as to whether the corresponding agent may process each step by itself may be output together.

Referring back to FIG. 7, in step S74, the first agent (i.e., the recipient agent) may generate first external processing result data for the request target sub-task in the plan based on the determination result in step S73 only when the first agent may process all of the one or more steps by itself.

In one embodiment, when a first step, which cannot be processed by the first agent, exists in a plan for processing a request target sub-task, the first agent may determine a third agent, which will request to process the first step, and may request the third agent to process the first step. Afterwards, the third agent may generate second external processing result data by using a third large language model in response to the step processing request and transmit the second external processing result data to the first agent.

That is, when the first recipient agent that has initially received a task processing request for a specific sub-task is determined to be unable to process some steps of the specific sub-task, the first recipient agent may determine a second recipient agent for processing some steps that cannot be processed, and may generate processing result data for the specific task based on processing result data for the first step, which is acquired in collaboration with the second recipient agent.

Meanwhile, the third agent for receiving a processing request for a step that cannot be processed by the first agent may be determined by the agent determination module of the first agent. Since the method for determining the recipient agent by the agent determination module has been described above with reference to FIG. 3, a redundant description will be omitted.

In one embodiment, when the first step that cannot be processed by the first agent exists in a plan for processing the request target sub-task, the first agent may transmit a response message indicating that an answer is not possible to the second agent (i.e., the host agent). Afterwards, the second agent may transmit the first task processing request to the third agent in response to receiving the response message.

That is, when the first recipient agent who has initially received the task processing request for a specific sub-task is determined to be unable to process some steps of the specific sub-task, the first recipient agent may transmit an answer indicating that the specific sub-task cannot be processed, to the host agent, and the host agent may acquire processing result data for the specific sub-task in collaboration with the second recipient agent.

Finally, in step S75, the first agent (i.e., the recipient agent) may transmit the first external processing result data generated through step S74 to the second agent. Afterwards, the second agent (i.e., the host agent) may generate final processing result data by using the first external processing result data and the first internal processing result data generated using the second large language model with respect to the other sub-tasks except at least some of the sub-tasks constituting the task, and may transmit the final processing result data to the user terminal through the second channel.

In one embodiment, between the steps S72 and S73 shown in FIG. 7, the evaluation module may generate a prompt for evaluating whether the step-by-step plan for processing the request target sub-task is valid, transmit the generated prompt to the large language model, receive an evaluation result for validity of the plan from the large language model that has received the prompt and perform a process subsequent to the step S73 based on the evaluation result.

That is, only when the evaluation result for the plan generated by the recipient agent (i.e., the first agent) to process the request target sub-task is valid, a process of determining whether the recipient agent may process the plan by itself and a process of generating external processing result data may be performed. When the evaluation result for the plan is not valid, a preset processing result message (e.g., a processing result non-generation message, an additional information request message and a re-request message for the user request) may be transmitted to the host agent (i.e., the second agent).

In this case, the evaluation result may be transmitted to the agent determination module or the agent information storage device so that the detailed information of the agent may be updated. Afterwards, an optimal agent for processing a specific sub-task may be determined in a process of generating a processing result for another user request based on the updated detailed information of the agent.

In one embodiment, between the steps S72 and S73 shown in FIG. 7, the evaluation module may evaluate whether the step-by-step plan is a valid plan by using a pre-learned evaluation model and transmit a non-performance processing result to the second agent when the step-by-step plan is not valid. In this case, the pre-learned evaluation model may be an AI model learned using user's feedback information on the step-by-step plan generated by the plan generation module of the first agent.

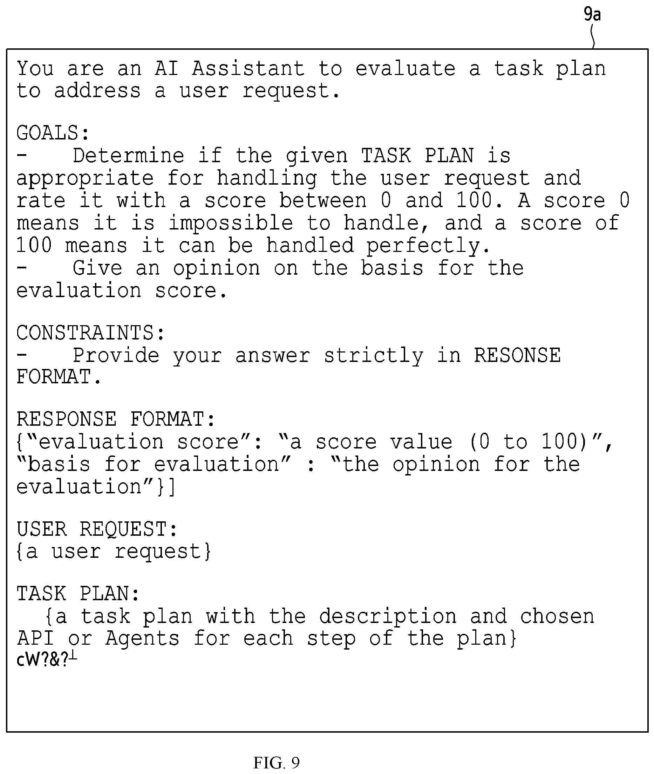

FIG. 9 is an exemplary view illustrating an example of a large language model prompt generated to evaluate a plan in some embodiments of the present disclosure.

As illustrated in FIG. 9, the evaluation module may generate a large language prompt 9a for evaluating a step-by-step plan generated for the request target sub-task included in the task processing request received from the second agent. The large language prompt 9a may include a purpose GOAL for LLM, constraints CONSTRAINTS, an answer format RESPONSE FORMAT, a content USER REQUEST of the user request included in the task processing request, and a content of a plan TASK PLAN.

In short, it may be understood that the evaluation module of the host agent evaluates validity of external processing result data received from the recipient agent or final processing result data generated based on the external processing result data, whereas the evaluation module of the recipient agent evaluates validity of the processing plan of the request target sub-task generated based on the information included in the task processing request.

In this case, validity of the plan is evaluated based on the content of the user request and information on each step of the sub-task constituting the plan, and the evaluation result may mean a score for adequacy of the plan generated for the task processing request received from the host agent. In addition, validity of the plan may be performed through one or more LLMs registered in the LLM service system or the pre-learned evaluation model.

In particular, the pre-learned evaluation model may be used by learning a model that predicts a score for a plan when information on the plan is input based on learning data composed of a score collected through user's feedback for the generated plan, and validity or adequacy of the plan may be determined based on a reference threshold value for the corresponding score. In addition, in case of validity evaluation of the plan based on the LLM, when the information on the plan is input, the LLM may be prompted to predict a validity score for the plan. In more detail, when the prompt for validity evaluation of the plan is generated, a basis opinion for the predicted score may be generated, and the corresponding basis opinion may be used in a later process of regenerating the plan.

Meanwhile, the evaluation result may be transmitted to the agent determination module or the agent information storage device so that the detailed information of the agent may be updated. Afterwards, an agent for processing the sub-task may be determined in a process of generating a processing result for another user request based on the updated detailed information of the agent.

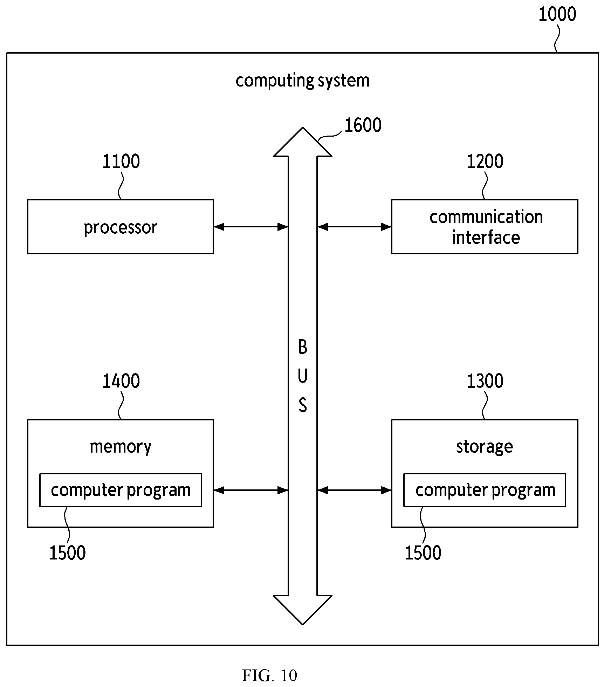

FIG. 10 is a hardware schematic view illustrating a task processing system through collaboration between agents according to some embodiments of the present disclosure. The task processing system 1000 through collaboration between agents shown in FIG. 10 may include one or more processors 1100, a system bus 1600, a communication interface 1200, a memory 1400 for loading a computer program 1500 performed by the processor 1100, and a storage 1300 for storing the computer program 1500.

The processor 1100 controls the overall operation of each component of the task processing system 1000 through collaboration between agents. The processor 1100 may perform computation for at least one application or program for executing the methods/operations according to various embodiments of the present disclosure. The memory 1400 stores various data, commands and/or information. The memory 1400 may load one or more computer programs 1500 from the storage 1300 to execute the methods/operations according to various embodiments of the present disclosure. The system bus 1600 provides a communication function between components of the task processing system 1000 through collaboration between agents. The communication interface 1200 supports Internet communication of the task processing system 1000 through collaboration between agents. The storage 1300 may non-temporarily store one or more computer programs 1500. The computer program 1500 may include one or more instructions in which the methods/operations according to various embodiments of the present disclosure are implemented. When the computer program 1500 is loaded into the memory 1400, the processor 1100 may perform the methods/operations according to various embodiments of the present disclosure by executing the one or more instructions.

In some embodiments, the task processing system 1000 through collaboration between agents described with reference to FIG. 10 may be configured using one or more physical servers included in a server farm based on the cloud technology such as a virtual machine. In this case, at least some of the processor 1100, the memory 1400 and the storage 1300 among the components shown in FIG. 10 may be virtual hardware, and the communication interface 1200 may be also configured with a virtualized networking element such as a virtual switch.

Various embodiments of the present disclosure and the advantageous effects according to the embodiments have been described with reference to FIGS. 1 to 10. The advantageous effects according to the technical spirits of the present disclosure are not limited to the above-mentioned advantageous effects and other advantageous effects, which are not mentioned, will be clearly understood by those skilled in the art from the description below.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method for processing a target task through collaboration between agents, the target task being a task for generating a processing result for a user request and consisting of a plurality of sub-tasks, wherein the method is performed by a computing system and comprises:
receiving (S31) a user request by a first agent (110a) from a user terminal and determining whether the first agent (110a) may process the user request by itself;
inquiring (S32) detailed information on each of a plurality of agents when the first agent (110a) determines that it cannot process the user request by itself, and determining a recipient of a first task processing request, which requests to process at least some of the plurality of sub-tasks of the target task, based on the detailed information;
transmitting (S33) the first task processing request in the form of a natural language from the first agent (110a) to a second agent (110b) determined as the recipient of the first task processing request, wherein the first task processing request is transmitted via a communication channel (140) supporting communication based on the natural language;
receiving (S34) first external processing result data from the second agent (110b) in response to the first task processing request; and
generating (S35) final processing result data for the user request by using the first external processing result data and transmitting the final processing result data to the user terminal.

2. The method of claim 1, wherein the determining whether the first agent may process the user request by itself includes generating a first prompt for generating a plan for processing the target task that generates an answer to the user request and receiving the plan from a first large language model that has received the first prompt, and
the plan includes a sub-task list of a step-by-step manner to process the target task.

3. The method of claim 2, wherein the first prompt includes at least one of domain information in charge for the first agent or information on an API set available for the first agent.

4. The method of claim 2, wherein the sub-task list includes information on a first sub-task that may be processed by the first agent and information on a second sub-task that cannot be processed by the first agent, and
the information on the first sub-task includes API information corresponding to the first sub-task.

5. The method of claim 1, wherein the determining whether the first agent may process the user request by itself includes generating a second prompt for determining whether the first agent may process the user request by itself and receiving a determination result as to whether the first agent may process the user request by itself, from a second large language model that has received the second prompt.

6. The method of claim 1, wherein the first task processing request requests processing of a first sub-task among a plurality of sub-tasks constituting the target task, and
the final processing result data is generated using the first external processing result data and internal processing result data generated for the others except the first sub-task among the plurality of sub-tasks.

7. The method of claim 6, wherein the transmitting the final processing result data to the user terminal includes:
generating a prompt for evaluating the final processing result data and transmitting the prompt to a large language model;
receiving an evaluation result for the final processing result data from the large language model that has received the prompt; and
transmitting the final processing result data to the user terminal based on the evaluation result.

8. The method of claim 7, wherein the transmitting the final processing result data to the user terminal based on the evaluation result further includes transmitting the evaluation result to an agent determination module.

9. The method of claim 6, wherein the transmitting the final processing result data to the user terminal includes:
inputting the final processing result data to a pre-learned evaluation model; and
transmitting the final processing result data to the user terminal only when a score output from the evaluation model is greater than or equal to a reference value.

10. A system for processing a target task through collaboration between agents, the target task being a task for generating a processing result for a user request and consisting of a plurality of sub-tasks, the processing system comprising:
one or more processors; and
a memory storing one or more computer programs executed by the one or more processors,
wherein the one or more computer programs include instructions for:
an operation of receiving a user request by a first agent (110a) from a user terminal and determining whether the first agent (110a) may process the user request by itself;
an operation of inquiring detailed information on each of a plurality of agents when the first agent (110a) determines that it cannot process the user request by itself, and determining a recipient of a first task processing request, which requests to process at least some of the plurality of sub-tasks of the target task, based on the detailed information;
an operation of transmitting the first task processing request in the form of a natural language from the first agent (110a) to a second agent (110b) determined as the recipient of the first task processing request, wherein the first task processing request is transmitted via a communication channel (140) supporting communication based on the natural language;
an operation of receiving first external processing result data from the second agent (110b) in response to the first task processing request; and
an operation of generating final processing result data for the user request by using the first external processing result data and transmitting the final processing result data to the user terminal.

11. The system of claim 10, wherein the determining whether the first agent may process the user request by itself includes generating a first prompt for generating a plan for processing the target task that generates an answer to the user request and receiving the plan from a first large language model that has received the first prompt, and
the plan includes a sub-task list of a step-by-step manner to process the target task.

12. The system of claim 10, wherein the determining whether the first agent may process the user request by itself includes generating a second prompt for determining whether the first agent may process the user request by itself and receiving a determination result as to whether the first agent may process the user request by itself, from a second large language model that has received the second prompt.

13. The system of claim 10, wherein the first task processing request requests processing of a first sub-task among a plurality of sub-tasks constituting the target task, and
the final processing result data is generated using the first external processing result data and internal processing result data generated for the others except the first sub-task among the plurality of sub-tasks.

14. The system of claim 13, wherein the transmitting the final processing result data to the user terminal includes:
generating a prompt for evaluating the final processing result data and transmitting the prompt to a large language model;
receiving an evaluation result for the final processing result data from the large language model that has received the prompt; and
transmitting the final processing result data to the user terminal based on the evaluation result.

15. The system of claim 13, wherein the transmitting the final processing result data to the user terminal includes:
transmitting the final processing result data to the user terminal;
inputting the final processing result data to a pre-learned evaluation model; and
transmitting the final processing result data to the user terminal only when a score output from the evaluation model is greater than or equal to a reference value.

## Patentansprüche

1. Verfahren zum Verarbeiten einer Zielaufgabe durch Zusammenarbeit zwischen Agenten, wobei die Zielaufgabe eine Aufgabe zum Erzeugen eines Verarbeitungsergebnisses für eine Benutzeranforderung ist und aus einer Vielzahl von Unteraufgaben besteht, wobei das Verfahren durch ein Rechensystem durchgeführt wird und umfasst:
Empfangen (S31) einer Benutzeranforderung durch einen ersten Agenten (110a) von einem Benutzerendgerät und Bestimmen, ob der erste Agent (110a) die Benutzeranforderung selbst verarbeiten darf;
Abfragen (S32) detaillierter Informationen über jeden einer Vielzahl von Agenten, wenn der erste Agent (110a) bestimmt, dass er die Benutzeranforderung nicht selbst verarbeiten kann, und Bestimmen eines Empfängers einer ersten Aufgabenverarbeitungsanforderung, die anfordert, mindestens einige der Vielzahl von Unteraufgaben der Zielaufgabe zu verarbeiten, basierend auf den detaillierten Informationen;
Übertragen (S33) der ersten Aufgabenverarbeitungsanforderung in Form einer natürlichen Sprache von dem ersten Agenten (110a) an einen zweiten Agenten (110b), der als der Empfänger der ersten Aufgabenverarbeitungsanforderung bestimmt wird, wobei die erste Aufgabenverarbeitungsanforderung über einen Kommunikationskanal (140), der eine Kommunikation basierend auf der natürlichen Sprache unterstützt, übertragen wird;
Empfangen (S34) erster externer Verarbeitungsergebnisdaten von dem zweiten Agenten (110b) als Reaktion auf die erste Aufgabenverarbeitungsanforderung und
Erzeugen (S35) abschließender Verarbeitungsergebnisdaten für die Benutzeranforderung durch Verwenden der ersten externen Verarbeitungsergebnisdaten und Übertragen der abschließenden Verarbeitungsergebnisdaten an das Benutzerendgerät.

2. Verfahren nach Anspruch 1, wobei das Bestimmen, ob der erste Agent die Benutzeranforderung selbst verarbeiten darf, ein Erzeugen einer ersten Aufforderung zum Erzeugen eines Plans zum Verarbeiten der Zielaufgabe, der eine Antwort auf die Benutzeranforderung erzeugt, und Empfangen des Plans von einem ersten großen Sprachmodell, das die erste Aufforderung empfangen hat, einschließt, und wobei der Plan eine Unteraufgabenliste einer Schritt-für-Schritt-Weise zum Verarbeiten der Zielaufgabe einschließt.

3. Verfahren nach Anspruch 2, wobei die erste Aufforderung mindestens eines von Domain-Informationen, die für den ersten Agenten gelten, oder Informationen über einen API-Satz, der für den ersten Agenten verfügbar ist, einschließt.

4. Verfahren nach Anspruch 2, wobei die Unteraufgabenliste Informationen über eine erste Unteraufgabe, die durch den ersten Agenten verarbeitet werden kann, und Informationen über eine zweite Unteraufgabe, die nicht durch den ersten Agenten verarbeitet werden kann, einschließt, und
wobei die Informationen über die erste Unteraufgabe API-Informationen, die der ersten Unteraufgabe entsprechen, einschließen.

5. Verfahren nach Anspruch 1, wobei das Bestimmen, ob der erste Agent die Benutzeranforderung selbst verarbeiten darf, ein Erzeugen einer zweiten Aufforderung zum Bestimmen, ob der erste Agent die Benutzeranforderung selbst verarbeiten darf, und Empfangen eines Bestimmungsergebnisses, ob der erste Agent die Benutzeranforderung selbst verarbeiten darf, von einem zweiten großen Sprachmodell, das die zweite Aufforderung empfangen hat, einschließt.

6. Verfahren nach Anspruch 1, wobei die erste Aufgabenverarbeitungsanforderung ein Verarbeiten einer ersten Unteraufgabe unter einer Vielzahl von Unteraufgaben, die die Zielaufgabe bilden, anfordert, und
wobei die abschließenden Verarbeitungsergebnisdaten unter Verwendung der ersten externen Verarbeitungsergebnisdaten und interner Verarbeitungsergebnisdaten, die für die anderen mit Ausnahme der ersten Unteraufgabe unter der Vielzahl von Unteraufgaben erzeugt werden, erzeugt werden.

7. Verfahren nach Anspruch 6, wobei das Übertragen der abschließenden Verarbeitungsergebnisdaten an das Benutzerendgerät einschließt:
Erzeugen einer Aufforderung zum Bewerten der abschließenden Verarbeitungsergebnisdaten und Übertragen der Aufforderung an ein großes Sprachmodell;
Empfangen eines Bewertungsergebnisses für die abschließenden Verarbeitungsergebnisdaten vom großen Sprachmodell, das die Aufforderung empfangen hat; und
Übertragen der abschließenden Verarbeitungsergebnisdaten an das Benutzerendgerät basierend auf dem Bewertungsergebnis.

8. Verfahren nach Anspruch 7, wobei das Übertragen der abschließenden Verarbeitungsergebnisdaten an das Benutzerendgerät basierend auf dem Bewertungsergebnis ferner ein Übertragen des Bewertungsergebnisses an ein Agentenbestimmungsmodul einschließt.

9. Verfahren nach Anspruch 6, wobei das Übertragen der abschließenden Verarbeitungsergebnisdaten an das Benutzerendgerät einschließt:
Eingeben der abschließenden Verarbeitungsergebnisdaten in ein vorab gelerntes Bewertungsmodell und Übertragen der abschließenden Verarbeitungsergebnisdaten an das Benutzerendgerät nur, wenn eine vom Bewertungsmodell ausgegebene Bewertung größer oder gleich einem Referenzwert ist.

10. System zum Verarbeiten einer Zielaufgabe durch Zusammenarbeit zwischen Agenten, wobei die Zielaufgabe eine Aufgabe zum Erzeugen eines Verarbeitungsergebnisses für eine Benutzeranforderung ist und aus einer Vielzahl von Unteraufgaben besteht, wobei das Verarbeitungssystem umfasst:
einen oder mehrere Prozessor(en) und
einen Speicher, der ein oder mehrere Computerprogramm(e) speichert, das/die durch den einen oder die mehreren Prozessor(en) ausgeführt wird/werden, wobei das eine oder die mehreren Computerprogramm(e) Anweisungen einschließen für:
einen Vorgang des Empfangens einer Benutzeranforderung durch einen ersten Agenten (110a) von einem Benutzerendgerät und Bestimmens, ob der erste Agent (110a) die Benutzeranforderung selbst verarbeiten darf;
einen Vorgang des Abfragens detaillierter Informationen über jeden einer Vielzahl von Agenten, wenn der erste Agent (110a) bestimmt, dass er die Benutzeranforderung nicht selbst verarbeiten kann, und Bestimmens eines Empfängers einer ersten Aufgabenverarbeitungsanforderung, die anfordert, mindestens einige der Vielzahl von Unteraufgaben der Zielaufgabe zu verarbeiten, basierend auf den detaillierten Informationen;
einen Vorgang des Übertragens der ersten Aufgabenverarbeitungsanforderung in Form einer natürlichen Sprache von dem ersten Agenten (110a) an einen zweiten Agenten (110b), der als der Empfänger der ersten Aufgabenverarbeitungsanforderung bestimmt wird, wobei die erste Aufgabenverarbeitungsanforderung über einen Kommunikationskanal (140) übertragen wird, der eine Kommunikation basierend auf der natürlichen Sprache unterstützt;
einen Vorgang des Empfangens erster externer Verarbeitungsergebnisdaten von dem zweiten Agenten (110b) als Reaktion auf die erste Aufgabenverarbeitungsanforderung und
einen Vorgang des Erzeugens abschließender Verarbeitungsergebnisdaten für die Benutzeranforderung durch Verwenden der ersten externen Verarbeitungsergebnisdaten und Übertragens der abschließenden Verarbeitungsergebnisdaten an das Benutzerendgerät.

11. System nach Anspruch 10, wobei das Bestimmen, ob der erste Agent die Benutzeranforderung selbst verarbeiten darf, ein Erzeugen einer ersten Aufforderung zum Erzeugen eines Plans zum Verarbeiten der Zielaufgabe, der eine Antwort auf die Benutzeranforderung erzeugt, und Empfangen des Plans von einem ersten großen Sprachmodell, das die erste Aufforderung empfangen hat, einschließt, und wobei der Plan eine Unteraufgabenliste einer Schritt-für-Schritt-Weise zum Verarbeiten der Zielaufgabe einschließt.

12. System nach Anspruch 10, wobei das Bestimmen, ob der erste Agent die Benutzeranforderung selbst verarbeiten darf, ein Erzeugen einer zweiten Aufforderung zum Bestimmen, ob der erste Agent die Benutzeranforderung selbst verarbeiten darf, und Empfangen eines Bestimmungsergebnisses, ob der erste Agent die Benutzeranforderung selbst verarbeiten darf, von einem zweiten großen Sprachmodell, das die zweite Aufforderung empfangen hat, einschließt.

13. System nach Anspruch 10, wobei die erste Aufgabenverarbeitungsanforderung ein Verarbeiten einer ersten Unteraufgabe unter einer Vielzahl von Unteraufgaben, die die Zielaufgabe bilden, anfordert, und
wobei die abschließenden Verarbeitungsergebnisdaten unter Verwendung der ersten externen Verarbeitungsergebnisdaten und interner Verarbeitungsergebnisdaten, die für die anderen mit Ausnahme der ersten Unteraufgabe unter der Vielzahl von Unteraufgaben erzeugt werden, erzeugt werden.

14. System nach Anspruch 13, wobei das Übertragen der abschließenden Verarbeitungsergebnisdaten an das Benutzerendgerät einschließt:
Erzeugen einer Aufforderung zum Bewerten der abschließenden Verarbeitungsergebnisdaten und Übertragen der Aufforderung an ein großes Sprachmodell;
Empfangen eines Bewertungsergebnisses für die abschließenden Verarbeitungsergebnisdaten vom großen Sprachmodell, das die Aufforderung empfangen hat;
und
Übertragen der abschließenden Verarbeitungsergebnisdaten an das Benutzerendgerät basierend auf dem Bewertungsergebnis.

15. System nach Anspruch 13, wobei das Übertragen der abschließenden Verarbeitungsergebnisdaten an das Benutzerendgerät einschließt:
Übertragen der abschließenden Verarbeitungsergebnisdaten an das Benutzerendgerät;
Eingeben der abschließenden Verarbeitungsergebnisdaten in ein vorab gelerntes Bewertungsmodell und Übertragen der abschließenden Verarbeitungsergebnisdaten an das Benutzerendgerät nur, wenn eine vom Bewertungsmodell ausgegebene Bewertung größer oder gleich einem Referenzwert ist.

## Revendications

1. Procédé de traitement d'une tâche cible par collaboration entre des agents, la tâche cible étant une tâche de génération d'un résultat de traitement pour une demande d'utilisateur et étant constituée d'une pluralité de sous-tâches, le procédé étant réalisé par un système informatique et comprenant :
la réception (S31) d'une demande d'utilisateur par un premier agent (110a) en provenance d'un terminal d'utilisateur et le fait de déterminer si le premier agent (110a) peut traiter seul la demande d'utilisateur ;
la sollicitation (S32) d'informations détaillées sur chacun d'une pluralité d'agents lorsque le premier agent (110a) détermine qu'il ne peut pas traiter seul la demande d'utilisateur, et la détermination d'un destinataire d'une première demande de traitement de tâche, qui demande de traiter au moins certaines des sous-tâches de la pluralité de sous-tâches de la tâche cible, sur la base des informations détaillées ;
la transmission (S33) de la première demande de traitement de tâche sous la forme d'un langage naturel du premier agent (110a) à un second agent (110b) déterminé comme destinataire de la première demande de traitement de tâche, la première demande de traitement de tâche étant transmise via un canal (140) de communication prenant en charge une communication basée sur le langage naturel ;
la réception (S34) de premières données de résultat de traitement externe provenant du second agent (110b) en réponse à la première demande de traitement de tâche ; et
la génération (S35) de données de résultat de traitement final pour la demande d'utilisateur en utilisant les premières données de résultat de traitement externe et la transmission des données de résultat de traitement final au terminal d'utilisateur.

2. Procédé selon la revendication 1, le fait de déterminer si le premier agent peut traiter seul la demande d'utilisateur comprenant la génération d'une première instruction générative afin de générer un plan pour traiter la tâche cible qui génère une réponse à la demande d'utilisateur et la réception du plan en provenance d'un premier grand modèle de langage qui a reçu la première instruction générative, et
le plan comprenant une liste de sous-tâches d'une manière de traiter la tâche cible étape par étape.

3. Procédé selon la revendication 2, la première instruction générative comprenant une information de domaine en responsabilité pour le premier agent et/ou une information sur un ensemble d'API disponible pour le premier agent.

4. Procédé selon la revendication 2, la liste de sous-tâches comprenant des informations sur une première sous-tâche qui peut être traitée par le premier agent et des informations sur une deuxième sous-tâche qui ne peut pas être traitée par le premier agent, et
les informations sur la première sous-tâche comprenant des informations d'API correspondant à la première sous-tâche.

5. Procédé selon la revendication 1, le fait de déterminer si le premier agent peut traiter seul la demande d'utilisateur comprenant la génération d'une seconde instruction générative pour déterminer si le premier agent peut traiter seul la demande d'utilisateur et la réception d'un résultat de détermination quant au fait que le premier agent peut ou non traiter seul la demande d'utilisateur, en provenance d'un second grand modèle de langage qui a reçu la seconde instruction générative.

6. Procédé selon la revendication 1, la première demande de traitement de tâche demandant le traitement d'une première sous-tâche parmi une pluralité de sous-tâches constituant la tâche cible, et
les données de résultat de traitement final étant générées à l'aide des premières données de résultat de traitement externe et des données de résultat de traitement interne générées pour les autres sous-tâches, à l'exception de la première sous-tâche parmi la pluralité de sous-tâches.

7. Procédé selon la revendication 6, la transmission des données de résultat de traitement final au terminal d'utilisateur comprenant :
la génération d'une instruction générative pour évaluer les données de résultat de traitement final et la transmission de l'instruction générative à un grand modèle de langage ;
la réception d'un résultat d'évaluation pour les données de résultat de traitement final en provenance du grand modèle de langage qui a reçu l'instruction générative ; et
la transmission des données de résultat de traitement final au terminal d'utilisateur sur la base du résultat d'évaluation.

8. Procédé selon la revendication 7, la transmission des données de résultat de traitement final au terminal d'utilisateur sur la base du résultat d'évaluation comprenant en outre la transmission du résultat d'évaluation à un module de détermination d'agent.

9. Procédé selon la revendication 6, la transmission des données de résultat de traitement final au terminal d'utilisateur comprenant :
l'introduction des données de résultat de traitement final dans un modèle d'évaluation pré-appris ; et
la transmission des données de résultat de traitement final au terminal d'utilisateur uniquement lorsqu'un score délivré à partir du modèle d'évaluation est supérieur ou égal à une valeur de référence.

10. Système de traitement d'une tâche cible par collaboration entre des agents, la tâche cible étant une tâche de génération d'un résultat de traitement pour une demande d'utilisateur et étant constituée d'une pluralité de sous-tâches, le système de traitement comprenant :
un ou plusieurs processeurs ; et
une mémoire conservant un ou plusieurs programmes d'ordinateur exécutés par le ou les processeurs, le ou les programmes d'ordinateur comprenant des instructions pour :
une opération consistant à recevoir une demande d'utilisateur par un premier agent (110a) en provenance d'un terminal d'utilisateur et à déterminer si le premier agent (110a) peut traiter seul la demande d'utilisateur ;
une opération de sollicitation d'informations détaillées sur chacun d'une pluralité d'agents lorsque le premier agent (110a) détermine qu'il ne peut pas traiter seul la demande d'utilisateur, et de détermination d'un destinataire d'une première demande de traitement de tâche, qui demande de traiter au moins certaines de la pluralité de sous-tâches de la tâche cible, sur la base des informations détaillées ;
une opération de transmission de la première demande de traitement de tâche sous la forme d'un langage naturel du premier agent (110a) à un second agent (110b) déterminé comme destinataire de la première demande de traitement de tâche, la première demande de traitement de tâche étant transmise via un canal (140) de communication prenant en charge une communication basée sur le langage naturel ;
une opération de réception de premières données de résultat de traitement externe provenant du second agent (110b) en réponse à la première demande de traitement de tâche ; et
une opération de génération de données de résultat de traitement final pour la demande de l'utilisateur en utilisant les premières données de résultat de traitement externe, et de transmission des données de résultat de traitement final au terminal de l'utilisateur.

11. Système selon la revendication 10, le fait de déterminer si le premier agent peut traiter seul la demande d'utilisateur comprenant la génération d'une première instruction générative afin de générer un plan pour traiter la tâche cible qui génère une réponse à la demande d'utilisateur et la réception du plan en provenance d'un premier grand modèle de langage qui a reçu la première instruction générative, et
le plan comprenant une liste de sous-tâches d'une manière de traiter la tâche cible étape par étape.

12. Système selon la revendication 10, le fait de déterminer si le premier agent peut traiter seul la demande d'utilisateur comprenant la génération d'une seconde instruction générative pour déterminer si le premier agent peut traiter seul la demande d'utilisateur et la réception d'un résultat de détermination quant au fait que le premier agent peut ou non traiter seul la demande d'utilisateur, en provenance d'un second grand modèle de langage qui a reçu la seconde instruction générative.

13. Système selon la revendication 10, la première demande de traitement de tâche demandant le traitement d'une première sous-tâche parmi une pluralité de sous-tâches constituant la tâche cible, et
les données de résultat de traitement final étant générées à l'aide des premières données de résultat de traitement externe et des données de résultat de traitement interne générées pour les autres sous-tâches, à l'exception de la première sous-tâche parmi la pluralité de sous-tâches.

14. Système selon la revendication 13, la transmission des données de résultat de traitement final au terminal d'utilisateur comprenant :
la génération d'une instruction générative pour évaluer les données de résultat de traitement final et la transmission de l'instruction générative à un grand modèle de langage ;
la réception d'un résultat d'évaluation pour les données de résultat de traitement final en provenance du grand modèle de langage qui a reçu l'instruction générative ; et
la transmission des données de résultat de traitement final au terminal d'utilisateur sur la base du résultat d'évaluation.

15. Système selon la revendication 13, la transmission des données de résultat de traitement final au terminal d'utilisateur comprenant :
la transmission au terminal d'utilisateur des données de résultat final du traitement ;
l'introduction des données de résultat de traitement final dans un modèle d'évaluation pré-appris ; et
la transmission des données de résultat de traitement final au terminal d'utilisateur uniquement lorsqu'un score délivré à partir du modèle d'évaluation est supérieur ou égal à une valeur de référence.
